# EUROPÄISCHE PATENTANMELDUNG

(11) **EP 4 567 534 A1**
(43) Veröffentlichungstag der Anmeldung: **11.06.2025**
(21) Anmeldenummer: 24214090.3
(22) Anmeldetag: 20.11.2024
(51) Int. Cl.: G05B 19/042, B61L 15/00

(54) **COMPUTER-IMPLEMENTIERTES VERFAHREN ZUM ÜBERPRÜFEN MINDESTENS EINER ZU ÜBERPRÜFENDEN TECHNISCHEN KOMPONENTE EINES TECHNISCHEN SYSTEMS HINSICHTLICH EINER ZU ERZIELENDEN SICHERHEIT**

(30) Priorität: 05.12.2023 DE 102023212247
(71) Anmelder: Siemens Aktiengesellschaft, 80333 München (DE)
(72) Erfinder: Rothbauer, Stefan, 86156 Augsburg (DE); Rothfelder, Martin, 80469 München (DE); Rössler, Wolfgang, 90429 Nürnberg (DE)
(74) Vertreter: Siemens Patent Attorneys

(57) **Zusammenfassung**

Die Erfindung betrifft ein computer-implementiertes Verfahren zum Überprüfen mindestens einer zu überprüfenden technischen Komponente eines technischen Systems hinsichtlich einer zu erzielenden Sicherheit, aufweisend die Schritte a. Bereitstellen eines Eingabemodells des technischen Systems (S1); wobei das technische System eine Mehrzahl von technischen Komponenten aufweist; wobei jede technische Komponente der Mehrzahl der technischen Komponenten eine Softwarekomponente oder eine Hardwarekomponente ist; wobei jeder technischen Komponente der Mehrzahl der technischen Komponenten mindestens eine Funktion zugeordnet ist; wobei jede technische Komponente der Mehrzahl der technischen Komponenten mindestens eine Schnittstelle für eine Datenübertragung aufweist; b. Bereitstellen von jeweils mindestens einem Ist-Zustand des Sicherheitsziels für die mindestens eine Funktion für jede technische Komponente der Mehrzahl der technischen Komponenten (S2); c. Bereitstellen von mindestens einem Soll-Zustand des Sicherheitsziels für die mindestens eine zu überprüfende technische Komponente der Mehrzahl der technischen Komponenten, welche die Sicherheit erzielen soll (S3); d. Bereitstellen einer Mehrzahl von vorbestimmten Maßnahmen (S4); wobei jeder vorbestimmten Maßnahme der Mehrzahl der vorbestimmten Maßnahmen mindestens ein Kriterium zugeordnet ist; e. Überprüfen derjenigen mindestens einen technischen Komponente, welche mindestens eine bestimmte Bedingung erfüllt, auf eine Abweichung des mindestens einen Soll-Zustands des Sicherheitsziels vom jeweiligen Ist-Zustand des Sicherheitsziels(S5); und f. Festlegen von mindestens einer vorbestimmten Maßnahme aus der Mehrzahl der vorbestimmten Maßnahmen für jede Abweichung (S6) .

Ferner betrifft die Erfindung ein technisches System und ein entsprechendes Computerprogrammprodukt.

## Beschreibung

### 1. Technisches Gebiet

Die Erfindung betrifft ein computer-implementiertes Verfahren zum Überprüfen mindestens einer zu überprüfenden technischen Komponente eines technischen Systems hinsichtlich einer zu erzielenden Sicherheit. Ferner ist die Erfindung auf ein entsprechendes technisches System und ein Computerprogrammprodukt gerichtet.

### 2. Stand der Technik

Sicherheitsrelevante technische Systeme auf den Anwendungsgebieten von eingebetteten Systemen (engl. embedded systems), beispielsweise auf dem Gebiet der Luftfahrt, der Medizintechnik oder der industriellen Fertigung gewinnen zunehmend an Bedeutung. Mit der zusätzlich steigenden Komplexität der technischen Systeme entwickelt sich ein Bedarf, die Sicherheit und die Qualität dieser technischen Systeme zu bewerten. Aus diesem Grund zielt die Systembewertung darauf ab, Fehler oder Unzulänglichkeiten in der Systemarchitektur hinsichtlich der Systemsicherheit aufzudecken. Je früher solche Fehler entdeckt werden, desto geringer sind die Kosten während des Entwicklungsprozesses für deren Beseitigung.

Typischerweise werden solche Sicherheitsbewertungen oder Analysen der technischen Systeme oder der Systemarchitekturen mit einer Bottom-up-Sicherheitsanalyse, wie beispielsweise einer Fehlermöglichkeits- und Fehlereinflussanalyse (engl. Failure Mode and Effect Analysis, FMEA), oder einer Top-down-Sicherheitsanalyse, wie beispielsweise einer Fehlerbaumanalyse (engl. Fault Tree Analysis, FTA), durchgeführt. Bei der Fehlerbaumanalyse kommen insbesondere Komponentenfehlerbäume zum Einsatz, da diese hierfür einen modellbasierten und einen komponentenbasierten Ansatz bieten.

Üblicherweise werden gemäß dem Stand der Technik die Funktionen der Applikationen oder Anwendungen technischer Systeme aus sogenannten Funktionsbausteinen aufgebaut. Eine beispielhafte Applikation ist eine Transportmittelapplikation für eine Zugsteuerung. Dabei ist es erforderlich, dass eine Funktion ein bestimmtes Sicherheitsziel erreicht. Das Sicherheitsziel kann als Sicherheitsanforderungsstufe, SIL, vorliegen. Das Sicherheitsziel ist abhängig von der Applikation.

In einer Applikation werden die Funktionen unterschiedlicher Sicherheitsziele herkömmlicherweise parallel verwendet. Die Funktionsbausteine werden gemäß dem Stand der Technik nach dem höchsten beteiligten Sicherheitsziel entwickelt, um sicherzustellen, dass die Funktionen auch das geforderte Sicherheitsziel erreichen. Meist müssen alle Funktionen ihre jeweiligen Ziele erreichen.

Nachteilig daran ist jedoch der erhöhte Aufwand bei der Entwicklung. Beispielsweise werden bei einem höheren geforderten Sicherheitsziel aufwändigere Entwicklungsprozesse zur Vermeidung systematischer Fehler notwendig, etwa eine tiefere Verifikation. Ein weiterer Nachteil liegt in erhöhtem Begutachtungsaufwand bei höheren Sicherheitszielen. Liegt ein Sicherheitsziel unterhalb SIL 1 vor, muss lediglich durch den Gutachter bestätigt werden, dass es sich nicht um sicherheitsrelevante Anteile handelt. Bei höheren Sicherheitszielen wird die Begutachtung gemäß geltender Normen durchgeführt.

Mit anderen Worten wird jede Funktion der Funktionen einer Applikation nach dem höchsten beteiligten Sicherheitsziel entwickelt, hat dies den Nachteil eines erhöhten Aufwandes.

Alternativ werden gemäß dem Stand der Technik detaillierte Analysen manuell durchgeführt, um die Nachweise der Rückwirkungsfreiheit von niedrigerer SIL-Stufe zu höherer SIL-Stufe zu zeigen. Allerdings sind die Analysen in großen Schaltungen sehr aufwändig. Folglich erfordern die Analysen in der Praxis einen vergleichbaren Aufwand mit der Entwicklung aller Funktionen einer Applikation nach dem höheren SIL.

Die vorliegende Erfindung stellt sich daher die Aufgabe ein computer-implementiertes Verfahren zum Überprüfen mindestens einer zu überprüfenden technischen Komponente eines technischen Systems hinsichtlich einer zu erzielenden Sicherheit bereitzustellen, welches effizienter und zuverlässiger ist.

### 3. Zusammenfassung der Erfindung

Die oben genannte Aufgabe wird erfindungsgemäß durch ein computer-implementiertes Verfahren zum Überprüfen mindestens einer zu überprüfenden technischen Komponente eines technischen Systems hinsichtlich einer zu erzielenden Sicherheit gelöst, aufweisend die Schritte
a. Bereitstellen eines Eingabemodells des technischen Systems; wobei
   das technische System eine Mehrzahl von technischen Komponenten aufweist; wobei
   jede technische Komponente der Mehrzahl der technischen Komponenten eine Softwarekomponente oder eine Hardwarekomponente ist; wobei
   jeder technischen Komponente der Mehrzahl der technischen Komponenten mindestens eine Funktion zugeordnet ist; wobei
   jede technische Komponente der Mehrzahl der technischen Komponenten mindestens eine Schnittstelle für eine Datenübertragung aufweist;
b. Bereitstellen von jeweils mindestens einem Ist-Zustand des Sicherheitsziels für die mindestens eine Funktion für jede technische Komponente der Mehrzahl der technischen Komponenten;
c. Bereitstellen von mindestens einem Soll-Zustand des Sicherheitsziels für die mindestens eine zu überprüfende technische Komponente der Mehrzahl der technischen Komponenten, welche die Sicherheit erzielen soll;
d. Bereitstellen einer Mehrzahl von vorbestimmten Maßnahmen; wobei
   jeder vorbestimmten Maßnahme der Mehrzahl der vorbestimmten Maßnahmen mindestens ein Kriterium zugeordnet ist;
e. Überprüfen derjenigen mindestens einen technischen Komponente, welche mindestens eine bestimmte Bedingung erfüllt, auf eine Abweichung des mindestens einen Soll-Zustands des Sicherheitsziels vom jeweiligen Ist-Zustand des Sicherheitsziels(S5); und
f. Festlegen von mindestens einer vorbestimmten Maßnahme aus der Mehrzahl der vorbestimmten Maßnahmen für jede Abweichung.

Dementsprechend ist die Erfindung auf ein computer-implementiertes Verfahren zum Überprüfen einer oder mehrerer technischer Komponenten, im Hinblick auf die zu erzielende Sicherheit. Das technische System kann ein sicherheitsrelevantes technisches System sein und für eine sicherheitsrelevante Anwendung ausgebildet sein. Mit anderen Worten wird überprüft, ob das technische System das Sicherheitsziel erreicht. Das Sicherheitsziel kann als Sicherheitsanforderungsstufe bzw.

### Sicherheitsintegritätslevel, SIL, vorliegen.

Zunächst werden die Eingabedaten bereitgestellt, nämlich das Eingabemodell des technischen Systems, die Zustände des Sicherheitsziels und die vorbestimmten Maßnahmen. Das Eingabemodell kann auch als Systemmodell bezeichnet werden und ist dementsprechend ein Abbild des technischen Systems mit seinen in Beziehung stehenden technischen Komponenten. Das Systemmodell beschreibt das Verhalten des technischen Systems gemäß der funktionalen Anforderungen. Es beschreibt die sich durch das Zusammenspiel der im technischen System vorhandenen technischen Komponenten ergebenden Systemfunktionen. Das Systemmodell kann in Form von UML-Diagrammen, SysML oder Activity Charts vorliegen.

Das System ist als technisches System mit technischen Komponenten ausgebildet. Ein beispielhaftes technisches System ist eine industrielle Anlage mit ihren technischen Komponenten, wie Robotereinheiten etc.

Dabei sind die technischen Komponenten des technischen Systems als Hardware- oder Softwarekomponenten ausgebildet. Sie weisen jeweils eine oder mehrere Schnittstellen für die Datenübertragung und eine oder mehrere zugeordnete Funktionen auf. Mit anderen Worten sind den technischen Komponenten entsprechende Funktionen zugewiesen.

Für jede Funktion der jeweiligen technischen Komponente werden auch die Ist-Zustände des Sicherheitsziels bereitgestellt. Dementsprechend weist die Mehrzahl der technischen Komponenten eine Mehrzahl von Funktionen mit den zugehörigen Ist-Zuständen auf. Weiterhin wird auch für die mindestens eine zu überprüfende technische Komponente der Soll-Zustand bereitgestellt, welche die Sicherheit erzielen soll.

Die vorbestimmten Maßnahmen können auch als Referenz-Maßnahmen bezeichnet werden, welche in einer flüchtigen oder nicht-flüchtigen Speichereinheit gespeichert und von dieser abgerufen werden können. Die Maßnahmen sind vordefiniert und weisen Kriterien auf. Beispielhafte Kriterien sind die Kosten und der Aufwand einer Maßnahme. Die Kosten oder der Aufwand entsteht durch die Einleitung und/oder die Durchführung der zugehörigen Maßnahme.

Die Eingabedaten können über eine oder mehrere Eingabeschnittstellen empfangen werden. Zusätzlich können die Ausgabedaten, wie die festgelegten Maßnahmen, auch über eine oder mehrere Ausgabeschnittstellen gesendet werden.

In einem weiteren Verfahrensschritt erfolgt die Überprüfung. Diejenigen technischen Komponenten, welche eine Bedingung erfüllen werden dahin gehend überprüft, ob eine Abweichung des mindestens einen Soll-Zustands des Sicherheitsziels vom mindestens einen Ist-Zustand des Sicherheitsziels vorliegt. Mit anderen Worten werden jegliche Abweichungen zwischen den Zuständen bestimmt. Jede Abweichung wird folglich identifiziert und für jede Abweichung wird eine vorbestimmte Maßnahme aus der Menge der vorbestimmten Maßnahmen festgelegt oder zugewiesen.

Für die Bestimmung oder Ermittlung einer Abweichung werden die Zustände, der Ist-Zustand mit dem Soll-Zustand, verglichen. Eine Abweichung liegt vor, wenn der Ist-Zustand nicht mit dem Soll-Zustand übereinstimmt. Der Ist-Zustand kann niedriger oder höher als der Soll-Zustand sein. Falls der Ist-Zustand niedriger als der Soll-Zustand ist, ist das Sicherheitsziel nicht erfüllt. In diesem Fall kann eine Maßnahme festgelegt werden, um das Sicherheitsziel zu erfüllen. Falls der Ist-Zustand höher oder gleich dem Soll-Zustand ist, ist das Sicherheitsziel erfüllt. In diesem Fall muss keine zusätzliche Maßnahme festgelegt werden, um das Sicherheitsziel zu erreichen.

Die vorliegende Erfindung stellt folglich sicher, die Überprüfung effizient und zuverlässig erfolgt. Genauer gesagt, wird überprüft, ob das zu erzielende Sicherheitsziel, SIL, erreichbar ist. Darüber hinaus werden konkrete Maßnahmen ermittelt und festgelegt, welche notwendig sind, um das Sicherheitsziel zu erreichen. Das erfindungsgemäße Verfahren ermöglicht ferner, die dafür auftretenden Kosten durch die Kriterien der Maßnahmen zu bewerten.

In einer Ausgestaltung ist das technische System ein Transportmittel und das Transportmittel ist für eine sicherheitsrelevante Anwendung ausgebildet. Demensprechend ist das technische System ein Transportmittel, bevorzugt ein autonomes Fahrzeug, besonders bevorzugt ein autonomer Zug. Das Transportmittel kann sicherheitsrelevant oder sicherheitskritisch sein. Die Anwendung des Transportmittels und die Funktionen der technischen Komponenten können ebenfalls sicherheitsrelevant sein. Eine beispielhafte sicherheitsrelevante Funktion ist eine Steuerungsfunktion.

In einer weiteren Ausgestaltung wird bei der Überprüfung die mindestens eine zu überprüfende technische Komponente in Schritt d. als erste technische Komponente aus der Mehrzahl der technischen Komponenten überprüft bevor die restlichen technischen Komponenten aus der Mehrzahl der technischen Komponenten überprüft werden. Dementsprechend werden weiterhin alle technischen Komponenten des technischen Systems auf Abweichungen untersucht, allerdings in einer bestimmten Reihenfolge. Die zu überprüfenden technischen Komponenten werden in der Reihenfolge als Erstes überprüft, bevor die weiteren technische Komponenten überprüft werden. Der Vorteil liegt darin, dass die Überprüfung effizient erfolgt. Es werden nur diejenigen Komponenten überprüft, die für die Überprüfung der aktuell zu überprüfenden Komponente stehen.

Mit anderen Worten geht das Verfahren von einem Modell aus, mit dem Ziel eine Funktion bezüglich des Sicherheitslevels zu bewerten. Hierfür wird rückwärts der Datenfluss (und weitere Beeinflussungsmöglichkeiten "Basismechanismen") verfolgt. Dadurch wird nur der Teil des technischen Systems betrachtet, der für diese Funktion benötigt wird.

In einer weiteren Ausgestaltung weist jede technische Komponente der Mehrzahl der technischen Komponenten mindestens eine Eingabeschnittstelle und mindestens eine Ausgabeschnittstelle jeweils für die Datenübertragung auf. Dementsprechend ist die mindestens eine Schnittstelle als mindestens eine Eingabeschnittstelle und mindestens eine Ausgabeschnittstelle ausgebildet. Dementsprechend wird zwischen Eingängen und Ausgängen unterschieden. Die Eingabedaten werden über die Eingabeschnittstelle empfangen und die Ausgabedaten werden über die Ausgabeschnittstelle versendet. Der Vorteil der Schnittstellen liegt darin, dass die Datenübertragung effizient ist.

In einer weiteren Ausgestaltung werden die Daten von der mindestens einen Ausgabeschnittstelle einer ersten technischen Komponente in Richtung zu der mindestens einen Eingabeschnittstelle einer zweiten technischen Komponente übertragen; und
die Überprüfung jeder technischen Komponente der Mehrzahl der technischen Komponenten des technischen Systems auf eine Abweichung des mindestens einen Soll-Zustands des Sicherheitsziels vom mindestens einen Ist-Zustand des Sicherheitsziels erfolgt gemäß der Richtung der Datenübertragung. Dementsprechend wird der Datenfluss ausgerichtet, die Daten werden von der Ausgabeschnittstelle zu der Eingabeschnittstelle hinübertragen. Die Richtung der Datenübertragung wird bei der Überprüfung der technischen Komponenten berücksichtigt. Der Vorteil liegt darin, dass die Überprüfung effizient erfolgt.

In einer weiteren Ausgestaltung umfasst mindestens eine technische Komponente der Mehrzahl der technischen Komponenten weiterhin mindestens einen Basismechanismus. Dementsprechend werden die Eingabedaten, in Form des Eingabemodells, um den Basismechanismus ergänzt. Unter Basismechanismen sind in der Ausführungsumgebung vorhandene Möglichkeiten zu verstehen, über die sich die technischen Komponenten gegenseitig beeinflussen können. Beispielsweise können technische Komponenten mit niedrigem SIL durch die Nutzung des Basismechanismus Persistierung (Daten nichtflüchtig schreiben) andere technische Komponenten (mit potentiell höherem SIL) beeinflussen, die diese geschriebenen Daten (oder Daten, die ungewollt verändert wurden) ebenfalls nutzen. Hier kann vorteilhafterweise analysiert werden, wie diese Rückwirkung auf dem benötigten Sicherheitsziel vermieden wird.

In einer weiteren Ausgestaltung ist der mindestens eine Basismechanismus ein Mechanismus ausgewählt aus der Gruppe bestehend aus Persistierung, sichere Prozessdatenkommunikation und Redundanzabgleich. Der Redundanzabgleich ist ein Mechanismus, mit dem redundant ausgelegte Funktionen bestimmte interne Zustände an die andere redundante Funktion weitergeben, so dass diese im Bedarfsfall nahtlos übernehmen kann. Der Vorteil ist darin zu sehen, dass die Beeinflussungen auch tatsächlich im Verfahren berücksichtigt werden und damit das gewünschte Ergebnis in Form des Soll-Zustands durch die möglicherweise notwendigen Maßnahmen auch korrekt abgesichert wird.

Weiterhin kann die mindestens eine technische Komponente der Mehrzahl der technischen Komponenten Zugriffe auf einen gemeinsamen Speicher verwenden, wie globale Datenbausteine, ein Prozessabbild, globale Zähler, Zeitglieder etc. Diese gemeinsamen Ressourcen über die Beeinflussung werden dadurch berücksichtigt. Folglich werden diese Beeinflussungen ebenfalls bei der Auswahl möglicher Maßnahmen berücksichtigt. Es wird sichergestellt, dass der zu erreichende Soll-Zustand der betrachteten Funktion tatsächlich gewährleistet wird.

In einer weiteren Ausgestaltung weist das computerimplementierte Verfahren weiterhin auf
- Bereitstellen des technischen Systems, der mindestens einen zu überprüfenden technischen Komponente, des Eingabemodells, der Funktionen, der Schnittstellen, des mindestens einen Soll-Zustands, der Ist-Zustände, der Mehrzahl der vorbestimmten Maßnahmen, der mindestens einen festgelegten Maßnahme aus der Mehrzahl der vorbestimmten Maßnahmen und/oder zugehöriger Daten;
- Ausgeben des technischen Systems, der mindestens einen zu überprüfenden technischen Komponente, des Eingabemodells, der Funktionen, der Schnittstellen, des mindestens einen Soll-Zustands, der Ist-Zustände, der Mehrzahl der vorbestimmten Maßnahmen, der mindestens einen festgelegten Maßnahme aus der Mehrzahl der vorbestimmten Maßnahmen und/oder zugehöriger Daten auf einer Anzeigeeinheit;
- Speichern des technischen Systems, der mindestens einen zu überprüfenden technischen Komponente, des Eingabemodells, der Funktionen, der Schnittstellen, des mindestens einen Soll-Zustands, der Ist-Zustände, der Mehrzahl der vorbestimmten Maßnahmen, der mindestens einen festgelegten Maßnahme aus der Mehrzahl der vorbestimmten Maßnahmen und/oder zugehöriger Daten in einer Speichereinheit;
- Übermitteln des technischen Systems, der mindestens einen zu überprüfenden technischen Komponente, des Eingabemodells, der Funktionen, der Schnittstellen, des mindestens einen Soll-Zustands, der Ist-Zustände, der Mehrzahl der vorbestimmten Maßnahmen, der mindestens einen festgelegten Maßnahme aus der Mehrzahl der vorbestimmten Maßnahmen und/oder zugehöriger Daten an eine Recheneinheit; und/oder
- Durchführen der mindestens einen festgelegten Maßnahme.

Dementsprechend können eine oder mehrere Verfahrensschritte nach der Bestimmung der festgelegten Maßnahmen als Ausgabe des erfindungsgemäßen Verfahrens eingeleitet werden. Die Verfahrensschritte können gleichzeitig, nacheinander oder auch stufenweise durchgeführt werden.

Jegliche Eingabedaten oder Ausgabedaten können an beliebige Recheneinheiten, wie eine Anzeige-, eine Verarbeitungs-, oder eine Speichereinheit übertragen werden. Die festgelegten Maßnahmen können als Ausgabe bereitgestellt werden. Ferner können die festgelegten Maßnahmen selbst oder in Form einer entsprechenden Nachricht oder Mitteilung an eine Recheneinheit übertragen werden und mittels einer Anzeigeeinheit der Recheneinheit einer Person wie Nutzer angezeigt werden. Die empfangende Recheneinheit kann nach Empfang die festgelegten Maßnahmen durchführen. Alternativ oder zusätzlich können die bestimmten oder bereitgestellten festgelegten Maßnahmen auch unmittelbar ohne Nutzerinteraktion oder andere Verfahrensschritte umgesetzt werden. Der Vorteil liegt darin, dass eine oder mehrere mögliche Architekturalternativen zur Erreichung des Sicherheitsziels für eine Funktion ermittelt werden (und dann auch bewertet werden können).

In einer weiteren Ausgestaltung ist die mindestens eine festgelegte Maßnahme eine Mehrzahl von festgelegten Maßnahmen.

In einer weiteren Ausgestaltung weist das computerimplementierte Verfahren weiterhin auf Priorisieren mindestens einer festgelegten Maßnahme aus der Mehrzahl der festgelegten Maßnahmen; wobei
die Priorisierung bevorzugt in Abhängigkeit von dem mindestens einen Kriterium erfolgt;
Auswählen der mindestens einen festgelegten Maßnahme aus der Mehrzahl der festgelegten Maßnahmen; wobei
die Auswahl bevorzugt unter Berücksichtigung der Priorisierung erfolgt; und/oder
Durchführen der mindestens einen festgelegten Maßnahme aus der Mehrzahl der festgelegten Maßnahmen; wobei die
Durchführung bevorzugt nach der Priorisierung und/oder der Auswahl erfolgt.

Dementsprechend wird eine Menge von Maßnahmen festgelegt. Diese Menge von festgelegten Maßnahmen kann ebenfalls bestimmt und bereitgestellt werden. Die Maßnahmen können mithilfe ihrer Kriterien zunächst priorisiert werden. Die priorisierten Maßnahmen können ferner durchgeführt werden oder eine oder mehrere Maßnahmen der priorisierten Maßnahmen werden mithilfe ihrer Prioritäten selektiert und lediglich die selektierten Maßnahmen werden durchgeführt. Beispielsweise werden die priorisierten Maßnahmen in einer bestimmten Reihenfolge durchgeführt, diejenigen Maßnahmen mit hoher Priorität werden vorrangig durchgeführt.

In einer weiteren Ausgestaltung ist die Maßnahme eine Maßnahme ausgewählt aus der Gruppe bestehend aus
Ändern des mindestens eines Soll-Zustands des Sicherheitsziels, Ändern des Sicherheitsziels, Ändern mindestens einer technischen Komponente, Ändern des technischen Systems, Ändern des Eingabemodells, Ändern mindestens einer Schnittstelle, Ändern der Daten und/oder Ändern mindestens einer vorbestimmten Maßnahme. Dementsprechend können durch eine Maßnahme unterschiedliche Änderungen oder Anpassungen betroffen sein. Das technische System kann geändert werden, derart, dass eine oder mehrere technische Komponenten hinzugefügt oder entfernt werden. Folglich wird das technische System um technische Komponenten ergänzt oder verringert. Die technische Komponente kann geändert werden, insbesondere nach Reimplementierung deren Ist-Zustand, deren Schnittstelle, die Verwendung der über die Schnittstelle erhaltenen Parameter innerhalb der technischen Komponente, so dass sich andere und günstiger Auswirkungen auf die Sicherheit der untersuchten Funktion ergeben.

Die Architektur des technischen Systems kann folglich, mit anderen Worten, unter Berücksichtigung der Kosten oder des Aufwands möglicher Maßnahmen zum Erreichen des Sicherheitsziels automatisiert oder interaktiv mit oder durch den Nutzer vorgenommen werden. Bestimmte Rahmenbedingungen können zusätzlich berücksichtigt werden.

Dadurch kann eine gezielte Entscheidung getroffen werden. Beispielsweise ist der Anteil der technischen Komponenten die zur Erreichung des Sicherheitsziels einen gewünschten Soll-Zustand unterstützen müssen hiermit begründbar. Dies ist mit geringem Aufwand möglich und bietet insbesondere bei Änderungen und erneuten Zulassungen den Vorteil eines geringeren Aufwands und eines Zeitvorteils bei der Entwicklung sowie Zulassung.

Ferner betrifft die Erfindung ein technisches System zum Durchführen des obigen Verfahrens.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
FIG 1 zeigt ein schematisches Ablaufdiagramm des erfindungsgemäßen Verfahrens.
FIG 2 zeigt eine schematische Darstellung des Eingabemodells gemäß einer Ausführungsform der Erfindung.

### 5. Beschreibung der bevorzugten Ausführungsformen

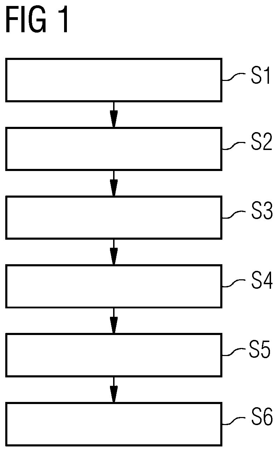

Im Folgenden werden bevorzugte Ausführungsformen der vorliegenden Erfindung in Bezug auf die Figur 1 beschrieben.

Figur 1 stellt ein Ablaufdiagramm des erfindungsgemäßen Verfahrens mit den Verfahrensschritten S1 bis S6 schematisch dar.

In einem ersten Verfahrensschritt wird das Eingabemodell des technischen Systems 20 bereitgestellt S1. Das technische System 20 weist die Mehrzahl der technischen Komponenten 10 auf. Jede technische Komponente 20 der Mehrzahl der technischen Komponenten ist eine Softwarekomponente oder eine Hardwarekomponente. Jeder technischen Komponente 20 der Mehrzahl der technischen Komponenten ist die mindestens eine Funktion zugeordnet. Jede technische Komponente 20 der Mehrzahl der technischen Komponenten weist die mindestens eine Schnittstelle für die Datenübertragung auf.

In einem weiteren Verfahrensschritt wird jeweils mindestens ein Ist-Zustand des Sicherheitsziels für die mindestens eine Funktion für jede technische Komponente der Mehrzahl der technischen Komponenten bereitgestellt S2.

In einem weiteren Verfahrensschritt wird mindestens ein Soll-Zustand des Sicherheitsziels für die mindestens eine zu überprüfende technische Komponente der Mehrzahl der technischen Komponenten, welche die Sicherheit erzielen soll bereitgestellt S3.

In einem weiteren Verfahrensschritt wird eine Mehrzahl von vorbestimmten Maßnahmen bereitgestellt S4. Jede vorbestimmte Maßnahme der Mehrzahl der vorbestimmten Maßnahmen ist mindestens ein Kriterium zugeordnet.

In einem weiteren Verfahrensschritt wird die mindestens eine technischen Komponente, welche mindestens eine bestimmte Bedingung erfüllt, auf eine Abweichung des mindestens einen Soll-Zustands des Sicherheitsziels vom jeweiligen Ist-Zustand des Sicherheitsziels überprüft S5.

In einem letzten Verfahrensschritt wird mindestens eine vorbestimmten Maßnahme aus der Mehrzahl der vorbestimmten Maßnahmen für jede Abweichung festgelegt S6.

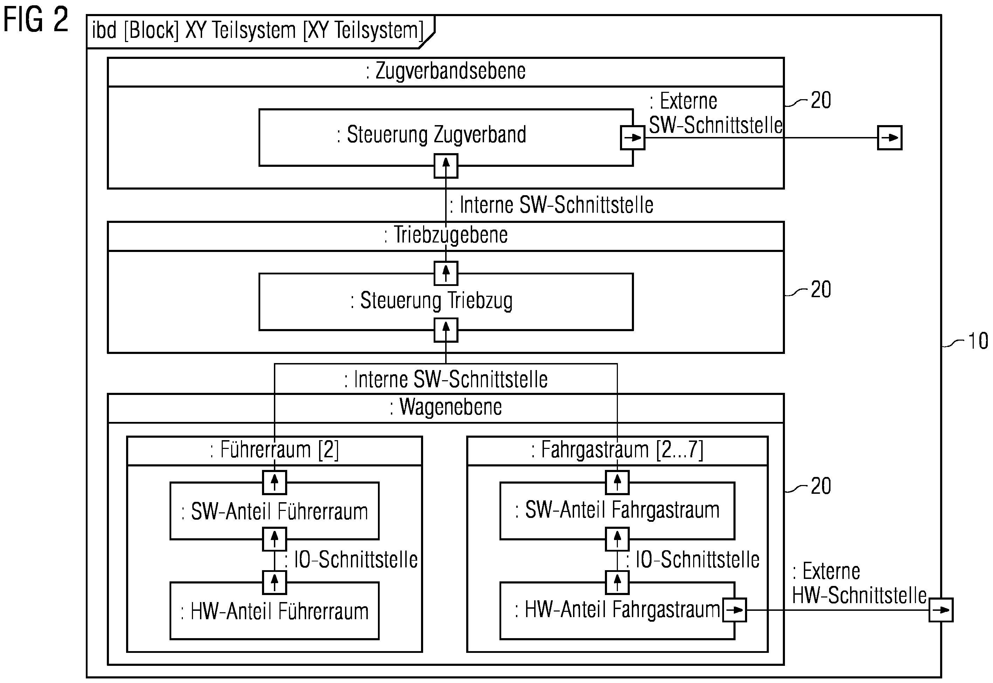

Figur 2 zeigt eine schematische Darstellung des Eingabemodells gemäß einer Ausführungsform der Erfindung.

Gemäß einer Ausführungsform der Erfindung wird das Eingabemodell um Informationen zu möglichen Wechselwirkungen ergänzt.

Beispielhafte Wechselwirkungen sind die Folgenden
- Eingänge (Input-ports), Ausgänge (Output-Ports), In/Out-Ports:
   Jeweils Soll-Zustand eines Sicherheitsziels und Ist-Zustand des Sicherheitsziels
   Interne Variablen, globale Variablen:
      Jeweils Soll-Zustand eines Sicherheitsziels und Ist-Zustand des Sicherheitsziels
      • Basismechanismen (Persistierung, PVID-Kommunikation, sichere Prozessdatenkommunikation, Redundanzabgleich):
         Jeweils Soll-Zustand eines Sicherheitsziels und Ist-Zustand des Sicherheitsziels
      • Übermäßiger Verbrauch von Rechenzeit
      • Programmierfehler, die zum STOP der gesamten
         Ausführungsumgebung bzw. des gesamten technischen Systems führen können.

Zunächst können die Maßnahmen zur Vermeidung der Beeinflussungsmöglichkeiten von niedrigerer Integritätsstufe zu höherer Integritätsstufe (Basic Integrity BI < Safety Integrity Level SIL 1 < ... < Safety Integrity Level SIL 4) für alle Klassen der Wechselwirkungen festgelegt und ggf. spezifisch für die jeweilige Trennung der beteiligten Sicherheitsstufen werden.

Dabei können auch unterschiedliche Maßnahmen oder Ausprägungen von Maßnahmen erforderlich sein, um die Trennung zu höheren SIL-Leveln zu erreichen, bevorzugt abhängig vom geplanten Anwendungsbereich. Beispielsweise kann für eine Separation von BI nach SIL1/2 ein Code-Review ausreichen, für die Separation nach SIL3/4 jedoch architekturelle Maßnahmen, die zur Laufzeit wirksam sind, notwendig sein.

Ferner werden der spezifische Aufwand und/oder die Kosten für jede der definierten Maßnahmen definiert.

Ferner kann das Eingabemodell vorbereitet werden. Die SIL-Informationen können für jeden Wechselwirkungspunkt definiert werden, wie die Standardwerte gemäß Entwicklungsvorgabe (z. B. BI oder SIL 1/2).

## Patentansprüche

1. Computer-implementiertes Verfahren zum Überprüfen mindestens einer zu überprüfenden technischen Komponente (20) eines technischen Systems (10) hinsichtlich einer zu erzielenden Sicherheit, aufweisend die Schritte
a. Bereitstellen eines Eingabemodells des technischen Systems (10) (S1); wobei
das technische System eine Mehrzahl von technischen Komponenten (20) aufweist; wobei
jede technische Komponente (20) der Mehrzahl der technischen Komponenten eine Softwarekomponente oder eine Hardwarekomponente ist; wobei
jeder technischen Komponente (20) der Mehrzahl der technischen Komponenten mindestens eine Funktion zugeordnet ist; wobei
jede technische Komponente (20) der Mehrzahl der technischen Komponenten mindestens eine Schnittstelle für eine Datenübertragung aufweist;
b. Bereitstellen von jeweils mindestens einem Ist-Zustand des Sicherheitsziels für die mindestens eine Funktion für jede technische Komponente (20) der Mehrzahl der technischen Komponenten (S2);
c. Bereitstellen von mindestens einem Soll-Zustand des Sicherheitsziels für die mindestens eine zu überprüfende technische Komponente (20) der Mehrzahl der technischen Komponenten, welche die Sicherheit erzielen soll (S3);
d. Bereitstellen einer Mehrzahl von vorbestimmten Maßnahmen (S4); wobei
jeder vorbestimmten Maßnahme der Mehrzahl der vorbestimmten Maßnahmen mindestens ein Kriterium zugeordnet ist;
e. Überprüfen derjenigen mindestens einen technischen Komponente (20), welche mindestens eine bestimmte Bedingung erfüllt, auf eine Abweichung des mindestens einen Soll-Zustands des Sicherheitsziels vom jeweiligen Ist-Zustand des Sicherheitsziels (S5); und
f. Festlegen von mindestens einer vorbestimmten Maßnahme aus der Mehrzahl der vorbestimmten Maßnahmen für jede Abweichung (S6) .

2. Computer-implementiertes Verfahren nach Anspruch 1, wobei das technische System (10) ein Transportmittel ist und das Transportmittel für eine sicherheits-relevante Anwendung ausgebildet ist.

3. Computer-implementiertes Verfahren nach Anspruch 1 oder Anspruch 2, wobei bei der Überprüfung die mindestens eine zu überprüfende technische Komponente (20) in Schritt d. als erste technische Komponente (20) aus der Mehrzahl der technischen Komponenten überprüft wird bevor die restlichen technischen Komponenten (20) aus der Mehrzahl der technischen Komponenten überprüft werden.

4. Computer-implementiertes Verfahren nach einem der vorhergehenden Ansprüche, wobei jede technische Komponente (20) der Mehrzahl der technischen Komponenten mindestens eine Eingabeschnittstelle und mindestens eine Ausgabeschnittstelle jeweils für die Datenübertragung aufweist.

5. Computer-implementiertes Verfahren nach Anspruch 4, wobei die Daten von der mindestens einen Ausgabeschnittstelle einer ersten technischen Komponente (20) in Richtung zu der mindestens einen Eingabeschnittstelle einer zweiten technischen Komponente (20) übertragen werden; und
die Überprüfung jeder technischen Komponente (20) der Mehrzahl der technischen Komponenten des technischen Systems auf eine Abweichung des mindestens einen Soll-Zustands des Sicherheitsziels vom mindestens einen Ist-Zustand des Sicherheitsziels gemäß der Richtung der Datenübertragung erfolgt.

6. Computer-implementiertes Verfahren nach einem der vorhergehenden Ansprüche, wobei mindestens eine technische Komponente (20) der Mehrzahl der technischen Komponenten weiterhin mindestens einen Basismechanismus umfasst.

7. Computer-implementiertes Verfahren nach Anspruch 6, wobei der mindestens eine Basismechanismus ein Mechanismus ist ausgewählt aus der Gruppe bestehend aus Persistierung, sichere Prozessdatenkommunikation und Redundanzabgleich.

8. Computer-implementiertes Verfahren nach einem der vorhergehenden Ansprüche, weiterhin aufweisend
- Bereitstellen des technischen Systems, der mindestens einen zu überprüfenden technischen Komponente, des Eingabemodells, der Funktionen, der Schnittstellen, des mindestens einen Soll-Zustands, der Ist-Zustände, der Mehrzahl der vorbestimmten Maßnahmen, der mindestens einen festgelegten Maßnahme aus der Mehrzahl der vorbestimmten Maßnahmen und/oder zugehöriger Daten;
- Ausgeben des technischen Systems, der mindestens einen zu überprüfenden technischen Komponente, des Eingabemodells, der Funktionen, der Schnittstellen, des mindestens einen Soll-Zustands, der Ist-Zustände, der Mehrzahl der vorbestimmten Maßnahmen, der mindestens einen festgelegten Maßnahme aus der Mehrzahl der vorbestimmten Maßnahmen und/oder zugehöriger Daten auf einer Anzeigeeinheit;
- Speichern des technischen Systems, der mindestens einen zu überprüfenden technischen Komponente, des Eingabemodells, der Funktionen, der Schnittstellen, des mindestens einen Soll-Zustands, der Ist-Zustände, der Mehrzahl der vorbestimmten Maßnahmen, der mindestens einen festgelegten Maßnahme aus der Mehrzahl der vorbestimmten Maßnahmen und/oder zugehöriger Daten in einer Speichereinheit;
- Übermitteln des technischen Systems, der mindestens einen zu überprüfenden technischen Komponente, des Eingabemodells, der Funktionen, der Schnittstellen, des mindestens einen Soll-Zustands, der Ist-Zustände, der Mehrzahl der vorbestimmten Maßnahmen, der mindestens einen festgelegten Maßnahme aus der Mehrzahl der vorbestimmten Maßnahmen und/oder zugehöriger Daten an eine Recheneinheit; und/oder
- Durchführen der mindestens einen festgelegten Maßnahme.

9. Computer-implementiertes Verfahren nach einem der vorhergehenden Ansprüche, wobei die mindestens eine festgelegte Maßnahme eine Mehrzahl von festgelegten Maßnahmen ist.

10. Computer-implementiertes Verfahren nach Anspruch 9, weiterhin aufweisend
Priorisieren mindestens einer festgelegten Maßnahme aus der Mehrzahl der festgelegten Maßnahmen; wobei
die Priorisierung bevorzugt in Abhängigkeit von dem mindestens einen Kriterium erfolgt;
Auswählen der mindestens einen festgelegten Maßnahme aus der Mehrzahl der festgelegten Maßnahmen; wobei
die Auswahl bevorzugt unter Berücksichtigung der Priorisierung erfolgt; und/oder
Durchführen der mindestens einen festgelegten Maßnahme aus der Mehrzahl der festgelegten Maßnahmen; wobei die
Durchführung bevorzugt nach der Priorisierung und/oder der Auswahl erfolgt.

11. Computer-implementiertes Verfahren nach einem der vorhergehenden Ansprüche, wobei die Maßnahme eine Maßnahme ist ausgewählt aus der Gruppe bestehend aus
Ändern des mindestens einen Soll-Zustands des Sicherheitsziels, Ändern des Sicherheitsziels, Ändern mindestens einer technischen Komponente, Ändern des technischen Systems, Ändern des Eingabemodells, Ändern mindestens einer Schnittstelle, Ändern der Daten und/oder Ändern mindestens einer vorbestimmten Maßnahme.

12. Technisches System zum Durchführen des Verfahrens nach einem der vorhergehenden Ansprüche.

13. Computerprogrammprodukt mit einem Computerprogramm, das Mittel zur Durchführung des Verfahrens nach einem der Ansprüche 1 bis 11 aufweist, wenn das Computerprogramm auf einer programmgesteuerten Einrichtung zur Ausführung gebracht wird.
